# EUROPEAN PATENT APPLICATION

(11) **EP 2 884 416 A1**
(43) Date of publication of application: **17.06.2015**
(21) Application number: 13306727.2
(22) Date of filing: 16.12.2013
(51) Int. Cl.: G06F 21/36, G06F 3/0488

(54) **Method to secure inputs received on a virtual keyboard**

(71) Applicant: Orange, 75015 Paris (FR)
(72) Inventor: Lobodzinski, Christopher, Crawley, Sussex RH10 7UB (GB)

(57) **Abstract**

Present system discloses a method presenting a virtual keyboard on a screen of an electronic device in order to secure inputs received on the virtual keyboard, the method being executed by the electronic device and comprising the step of generating the virtual keyboard at a default position, applying a rotation to the virtual keyboard, presenting the rotated virtual keyboard on the screen of the electronic device wherein the rotation is applied to the virtual keyboard around a predetermined reference point and according to a randomly generated rotation angle from the default position.

## Description

### FIELD OF THE PRESENT SYSTEM:

The present invention relates, in general, to devices and methods for securely inputting potentially critical data (e.g., ATM PIN code), and, in particular, to devices and methods for securely inputting critical data on electronic devices with a touch screen such as mobile phones.

### BACKGROUND OF THE PRESENT SYSTEM:

Due to the growth of on-line services such as e-commerce or banking application, or even e-mail services, security to access on-line services has become critical. The security of the access to these services relies most often on requesting a user to provide credentials such as a login and a password.

On a computer, it is known that fraudster may compromise the computer by installing rogue software such as "key logger" or "keyboard capturing" software. Such software are able to record (or log) the keys struck on a keyboard in a covert manner so that the person using the keyboard is unaware that their actions are being monitored. It is then possible for the fraudster to extract from the captured keystroke logins and passwords inputted by a legitimate user.

To prevent such attack, it is known to display a virtual keyboard on the computer screen. A user may for example enters his login via a keyboard connected to the computer, but may be invited to enter his password via a virtual keyboard displayed on the screen, using a pointing device such as a mouse. Key loggers software alone are ineffective against this type of mechanism based on virtual keyboard as, even if the different positions of the pointing device may be known, it won't be possible to deduce the corresponding user input from these positions as the location of the virtual keyboard itself on the screen is unknown to the key logger software.

With the apparition and development of handheld electronic devices, such as smartphones or tablets and more precisely to the apparition of such devices using touch screen technologies, the problematic of securing data inputs on virtual keyboard reappeared. Indeed, such electronic devices with touch screens run operating System (OS) providing features standardized input methods, such as virtual keyboard based input method.

Virtual keyboards or on-screen keyboards often take the form of computer software that display an image of a keyboard on the screen. A pointing or input device such as a mouse or a touch screen can be used to operate each virtual key to enter text. Software keyboards have become very popular in touch screen enabled smart phones, due to the additional cost and space requirements of other types of hardware keyboards. Operating Systems such as Microsoft Windows, Mac OS, and some varieties of GNU/Linux include on-screen keyboards that can be controlled with a pointing device such as a mouse. In virtual or software keyboards, the pointing device has to be maneuvered onto the on-screen letters given by the software. On the selection of a letter (via a click for a mouse or a user input - a touch - for a touch screen), the software writes the respective letter on the respective spot (Wikipedia).

As such methods are standardized at OS layer, position on a touch screen of the virtual keyboard may be easily deduced, according to some characteristics such as OS version and/or electronic device model. As the relationships between the keys/numbers of the virtual keyboard and their respective default locations on the touch screen are known or can be determined, key logger software represents a menace.

Moreover, more basic attacks are possible on touch screen, as usually the fingertips of a user leave fingerprints on the touch screen. A fraudster, only by looking at the touch screen of an electronic device after the inputting of a password may gain much knowledge on the password by deducing what keys of the virtual keyboard were pressed from the fingerprints. Indeed, the fraudster will learn that the password is a combination of the symbols corresponding to the pressed keys. For example, taking for example a password of four digits, if the four digits in question can be retrieved by looking at fingerprints on the touch screen, the number of combination is reduced from 10,000 possibilities to just 256 possibilities.

Document US 2008/0148186 discloses a method to improve the security of inputting data on a virtual keyboard. In the document, the virtual keyboard has substantially the same layout of keys as the layout on a normal keypad, but with the keys in a random organization. Such randomness of the layout of the keys of the virtual keyboard prevents previously described technique to be effective.

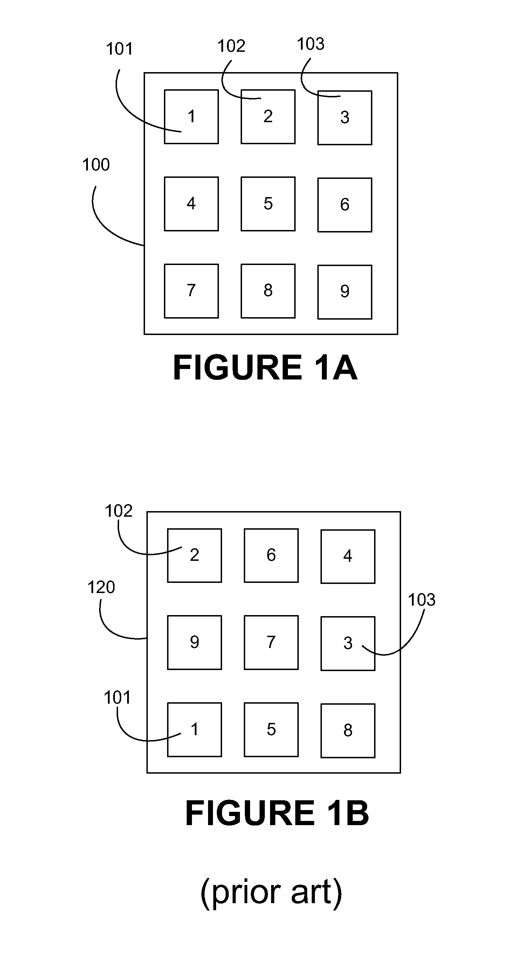

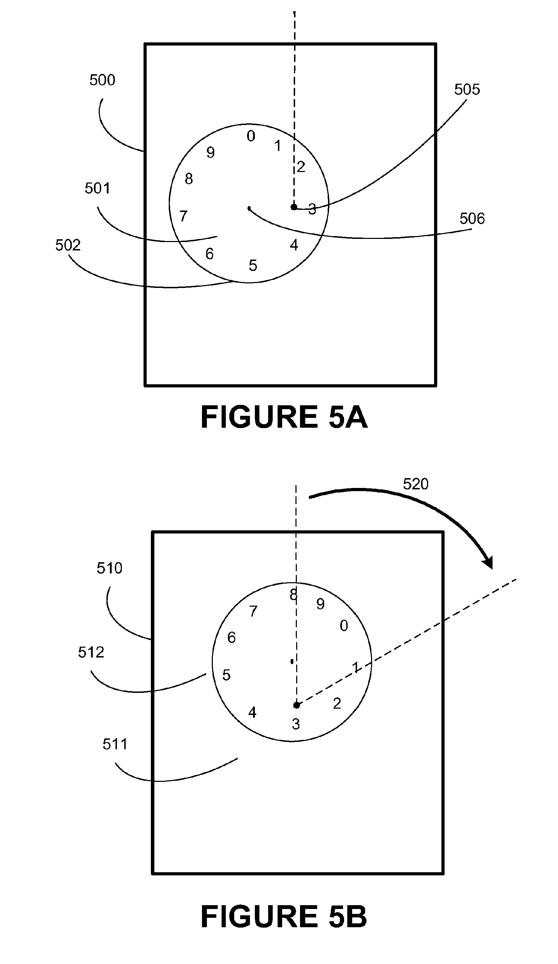

Fig. 1A and 1B are an illustration of the method disclosed in Document US 2008/0148186 (cf. FIG. 5) applied to a virtual keypad for simplicity sake. FIG. 1 A is an illustration of a virtual keyboard, or more specifically here, a Personal Identification Number (PIN) keypad, potentially displayed on a touch screen of an electronic device such as an Automated Teller Machine (ATM) or a smartphone. As illustrated in FIG. 1B, comparing to the previous virtual keyboard as shown in FIG. 1A, in Document US 2008/0148186 the layout of the different keys of the virtual PIN keypad is reorganized randomly. Such randomization of the layout of the virtual PIN keypad keys voids any possibility of intercepting the input of a password on the virtual PIN keypad by capturing the position of the user touch inputs on the touch screen. A basic key logger software will not be able to reconcile afterwards the captured positions with a theoretical location of the keys on the screen due to the randomness of their location. Indeed, as illustrated, key 103, classically located in the upper left corner on a (virtual) PIN keypad, as shown in FIG. 1A, has been moved in FIG. 1 B to another location of the PIN keypad.

Similarly, Document US 2008/0148186 prevents from deducing possible passwords by examining fingertips on the touch screen of an electronic device. Thus, the method disclosed in Document US 2008/0148186 offers a good protection against key logger software or fingertips guessing of passwords.

Nevertheless, such method presents a drawback in term of simplicity of use. Indeed, a user may be unsettled when using such a virtual keyboard with a random layout of the keys. It means that every time the user wants to enter a password on such randomized virtual keyboard, the user will need to find the different keys corresponding to the letters, numbers or symbols as their position or location will vary on the keyboard. Besides this unsettling effect, which may cause a user to lose some time finding the right keys on the virtual keyboard, this prevents a gestural memorization of a password. Indeed, especially for people with visual memory, sequence of keys to be pressed may be a way to memorize a password; at least it may contribute to the memorization.

US patent n° 8,392,846 discloses methods for securing the input of a password on a virtual keyboard. One of the embodiments disclosed in US 8,392,846 prevents the previously adverse effect of US 2008/0148186. FIG. 2 illustrates such embodiment. In this embodiment, the virtual keyboard has the same layout of keys as the layout on a normal keypad. This time, it's the position of the keyboard itself that is randomized on the screen. Such embodiment also offers a good protection against key logger software or fingertips guessing of passwords while preserving the layout of the keyboard usual to the users.

But such embodiment is not adapted to the size of handheld electronic devices such as smart phones. Indeed, in such electronic devices, the size of the screen is limited. To implement previous method, that is to say randomizing the position of a virtual keyboard by moving it from one location on the screen to another, will necessitate having a virtual keyboard size significantly smaller than the size of the screen. Indeed, otherwise, it will not be possible to move the virtual keyboard within the screen. As the size of the screen is limited, it induces that the size of a virtual keyboard according to previous embodiment of US patent n° 8,392,846 may be too small to be used, at least comfortably, by a user.

Thus, there is still a need for a method for securing the user inputs on a virtual keyboard displayed on the small screen of an electronic device.

### SUMMARY OF THE PRESENT SYSTEM:

It is an object of the present system to overcome disadvantages and/or make improvements in the prior art.

Present system discloses a method for presenting a virtual keyboard on a screen of an electronic device in order to secure the virtual keyboard input, the method being executed by the electronic device and comprising the step of generating the virtual keyboard at a default location, applying a rotation to the virtual keyboard, presenting the rotated virtual keyboard on the screen of the electronic device wherein the rotation is applied to the virtual keyboard around a predetermined reference point and according to a randomly generated rotation angle from the default location.

The random rotation transformation (in short, rotation) applied to the virtual keyboard modifies the respective position of the keys of the virtual keyboard within the screen of the electronic device. Indeed, instead of displaying the virtual keyboard at a default location, the rotation transforms the classical presentation of the keyboard. As such, this randomness offers the desired protection against possible key loggers program. As a rotation applied to an object does not modify the shape of the object, this method also advantageously allows the layout of the keys of the virtual keyboard to be unchanged, improving the user experience by facilitating the input on the keyboard. Moreover, this rotation transformation can be applied to a bigger graphical object such as the virtual keyboard within the screen of the electronic device than a transformation such as a translation. Indeed, screen size constraint is much less a problem when applying an adequate rotation to an object. Thus, this method for securing the user inputs on a virtual keyboard displayed on the screen of an electronic device advantageously allows the display of a bigger virtual keyboard than previous solutions. This could permit bigger size keys of the virtual keyboard, improving the readability of the virtual keyboard, or possibly to implement virtual keyboard with more keys.

In one embodiment of present system, the reference point is the center of the virtual keyboard.

As it would be understood, placing the reference point of a rotation at the center of a graphical object allows the rotation to limit any possible displacement of the graphical object over its original position within the screen. Thus, by placing the rotation point at the center of the virtual keyboard, it allows to maximize the possible size of the virtual keyboard displayed on the screen. This is particularly true if the default virtual keyboard is presented at the center of the screen.

In a complementary embodiment of present system, the reference point is distinct from the center of the virtual keyboard.

Advantageously, comparing to placing the reference point in the center of the virtual keyboard, placing the reference point distinct from the center of the virtual keyboard brings even more randomness to the position of the keys within the screen. Indeed, if the reference point of the rotation transformation is off-centered according to the virtual keyboard, all possible position of the virtual keyboard after a random position covers a larger area than by placing the reference point at the center. In other words, the virtual keyboard position is shifted during the rotation. This is improving randomness and as such security of the system.

In another alternative embodiment, the virtual keyboard is arranged in a circular form

In another alternative embodiment, the reference point is at the center of the screen.

The circular form or shape of the virtual keyboard maximizes the possible size of the virtual keyboard comparing to more common square or rectangular shapes. Indeed, when rotating such virtual keyboard, if the reference point is chosen adequately at the center of the virtual keyboard, there is no risk that a corner of the virtual keyboard comes out the screen.

In an alternative embodiment, the randomized angle of rotation value is chosen randomly among a list of predefined angle of rotation values.

By choosing randomly among a list of preset or predefined values the angle of rotation, the system may prevent keys of the virtual keyboard to be stacked over previous or possible other position of the same keys. In other words, this solution guarantees that when a rotation is applied to the virtual keyboard, the new position of each key will not stack over the previous position of the same key. This guarantees that user inputs corresponding to a key will be different after a rotation.

In another alternative embodiment, the method further comprises, after the rotation of the virtual keyboard, the steps of rotating the keys of the virtual keyboard around their respective center of an angle of rotation value opposite to the previous randomized angle of rotation value.

In another alternative embodiment, the method further comprises, after the rotation of the virtual keyboard, the steps of rotating the symbol associated to the keys of the virtual keyboard around the respective center of the associated key and of an angle of rotation value opposite to the randomized angle of rotation value.

By rotating either the symbols within the keys, or the keys themselves around their respective centers and of an angle of rotation opposite to the randomized angle of rotation, this is preserving the readability of the virtual keyboard.

In another alternative embodiment, the screen is a touch screen.

Present system advantageously applies to touch screen, as to prevent fingerprints detection of an input password.

In another alternative embodiment, the rotation is applied before or after each user input.

Such system described hereafter may be used before or after each user input as to greatly improve the randomness of the position of the keys on the screen and reinforce the security of the system.

In another alternative embodiment, the position of the reference point is moved randomly each time the virtual keyboard is rotated.

Advantageously, randomness of the position of the keys on the screen is improved.

Another object of the invention is an electronic device comprising a screen, the electronic device further comprising a processor arranged to generate a virtual keyboard at a default position, apply a rotation to the virtual keyboard, present the rotated virtual keyboard on the screen wherein the rotation is applied to the virtual keyboard around a predetermined reference point and according to a randomly generated rotation angle from the default position.

Another object of the invention concerns a computer program or application software, in particular computer programs on or in a non-transitory computer readable medium, suitable for presenting a virtual keyboard on a screen of an electronic device in order to secure inputs received on the virtual keyboard. These programs can use any programming language, and be in the form of source code, binary code, or of code intermediate between source code and object code such as in a partially compiled form, or in any other desirable form for implementing the methods according to the invention.

The information medium may be any entity or device capable of storing the software. For example, the medium can comprise a storage means, such as a ROM, for example a CD/DVD ROM or a microelectronic circuit ROM, or else a magnetic recording means, for example a diskette (floppy disk) or a hard disk.

### BRIEF DESCRIPTION OF THE DRAWINGS:

The invention is explained in further detail, and by way of example, with reference to the accompanying drawings wherein:
FIGs. 1A and 1B show an embodiment of document US 2008/0148186 teaching;
FIGs. 2A and 2B show an embodiment of US patent n° 8,392,846 teaching;
FIGs. 3A and 3B show an illustration of present system embodiment;
FIGs. 4A and 4B show an illustration of present system embodiment applied to a circular keyboard;
FIGs. 5A and 5B show an illustration of present system embodiment applied to a circular keyboard and with an off centered reference point for the rotation;
FIG. 6 shows an illustration of an electronic device implementing present system;
FIG. 7 shows a flowchart of an exemplary embodiment of present system.

### DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well known devices, circuits, tools, techniques and methods are omitted so as not to obscure the description of the present system. It should be expressly understood that the drawings are included for illustrative purposes and do not represent the scope of the present system. In the accompanying drawings, similar reference numbers in different drawings may designate similar elements.

FIGs. 1A and 1B show an embodiment of document US 2008/0148186 teaching. This embodiment has been shortly described before. FIG. 1A shows a classical virtual PN keypad that is normally displayed or presented on a touch screen. Only the part of the screen 100 or 120 corresponding to the virtual PIN keypad has been represented here. As shown by comparing FIG. 1A and FIG. 1B, security is achieved by randomly displacing the different keys of the virtual keypad. Indeed, no key in FIG. 1B has the same location within the virtual PIN keypad compared to FIG. 1A virtual PIN keypad. Such teaching may be applied to any virtual keyboard, randomly moving, displacing or changing the location of the keys within the virtual keyboard. As said before, such teaching presents the defect that a user has to find out the location of each key, losing time, and preventing a visual or spatial memorization of a password.

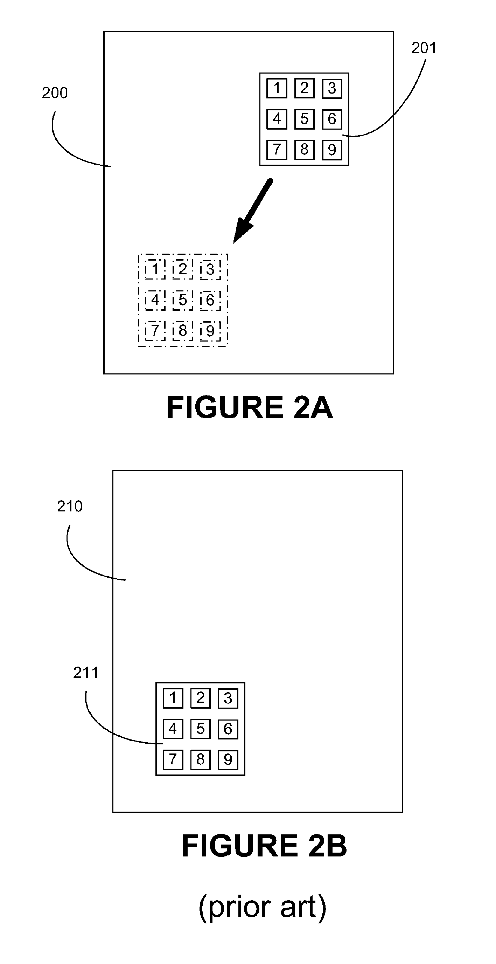

FIGs. 2A and 2B show an embodiment of US patent n° 8,392,846 teaching. This embodiment has also been shortly described before. Contrary to previous FIG. 1, 200 and 210 represent the whole touch screen. Virtual keyboard 201 would correspond to virtual keyboard 100 of FIGS 1. In order to obtain randomness, the whole virtual keyboard 201 is displaced within the touch screen 200. Indeed, in FIG. 2B, location of the keys of the displaced virtual keyboard 211 are different from the location of the virtual keyboard 201. Such teaching does not present the drawback of previous teaching. Nevertheless, in order to be able to displace or change the location of the virtual keyboard within the screen, the virtual keyboard size is limited. This is a problem with small screens, and more generally virtual keyboard size are limited with this teaching.

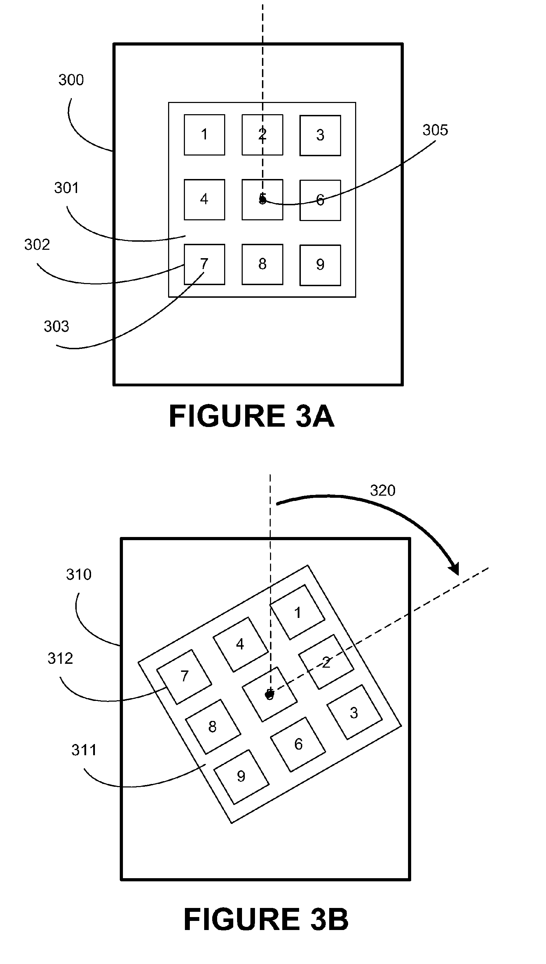

FIGs. 3A and 3B show an illustration of present system embodiment. 300 and 310 represent a screen (as 200 and 210 in FIG. 2) of an electronic device 600 (described hereafter). 301 and 311 represent a same virtual keyboard, here more precisely a virtual PIN keypad. A virtual keyboard comprises a layout of keys, such as key 302. Each key is associated to a symbol; here for the key 302, it is the symbol 303 (representing the value "7").

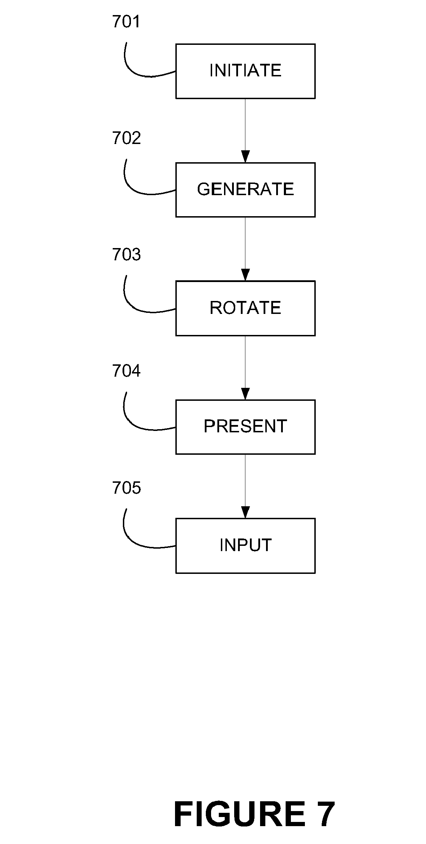

FIGs 3A and 3B shall be described using FIG. 7 flowchart support.

In a step 701, the system is initiated. For example, an application running on the electronic device may need to present a virtual keyboard on the screen to collect a user input, for example when requesting a PIN code from a user.

In a step 702, in order to secure inputs received on the virtual keyboard, the electronic device 600 generates the virtual keyboard at a default position within the screen 300. Such position may be for example position represented in 301. It is to be noted that once the virtual keyboard has been generated at the default location by the electronic device 600, it may be displayed or not on the screen. Here, for clarity sake, it has been represented on FIG. 3A.

In following step 703, the electronic device 600 applies a rotation to the virtual keyboard 301. Here, as represented in FIG. 3A, the rotation is applied to the virtual keyboard 301 around a predetermined reference point 305 and according to a randomly generated rotation angle 320 from the default position.
In the example represented in FIG. 34 and 3B, the reference point 305 is the center of the virtual keyboard.

In next step 704, the electronic device 600 presents the rotated virtual keyboard on its screen, as shown in FIG. 3B.
In order to improve the readability of the virtual keyboard, it is possible in one embodiment of present system to rotate the symbols associated to the keys of the virtual keyboard around the respective center of the associated keys and of an angle of rotation value opposite to the randomized angle of rotation value, as illustrated in FIG. 3B. In other words, a symbol associated to a key is rotated of an angle of rotation value equal to the randomized angle of rotation value, but in the other way round. Indeed, as represented, the symbol 303 - representing the value "7" - of the key 302 has been rotated in FIG. 3B from an angle of rotation opposite to the rotation angle 320, and around the center of the key 302, in order to keep the symbol "7" readable, that is to say here along a vertical axis.
It is to be noted that in another embodiment of present system, not represented here, the keys may have been rotated around their respective center of an angle of rotation value opposite to the previous randomized angle of rotation value. By rotating a key as a block, the same effect as rotating the symbol within the key is obtained, that is to say a preserved readability of the symbol.
In some instances, the random rotation may cause the virtual keyboard to be partially displayed outside the screen. Thus, in order to maximize the size of the usable virtual keyboard, the reference point of the rotation is advantageously chosen at the center of the screen.

In final step 705, the user may enter for example the requested PIN code on the virtual keyboard.

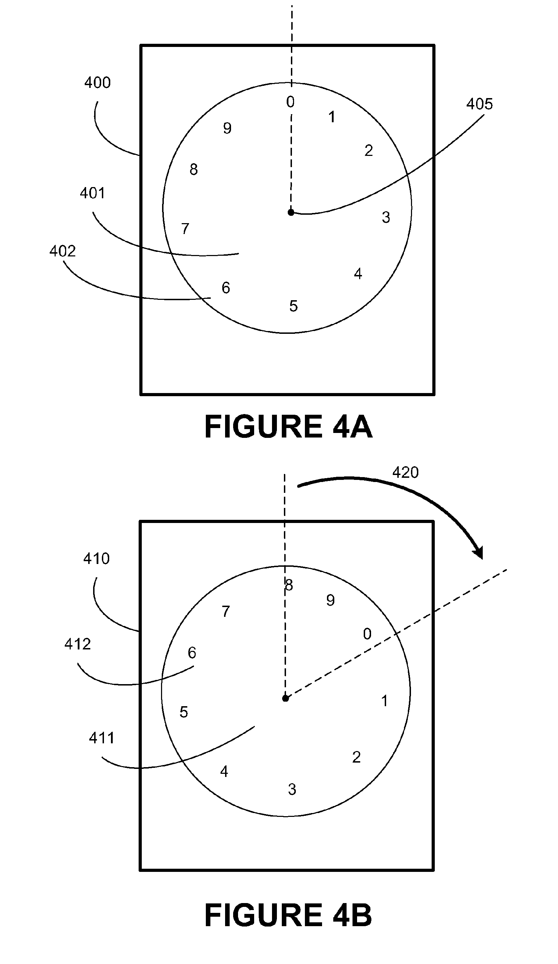

FIGs. 4A and 4B show an illustration of present system embodiment applied to a circular keyboard. Indeed, as seen in previous embodiments described in FIG. 3A and 3B, the shape of the virtual keyboard could be adapted to maximize the virtual keyboard size. As a rotation is applied to the virtual keyboard, circular shape is a particularly adapted shape. Indeed, in FIG. 4A and 4B, the virtual keyboard 401 and 411 is arranged in a circular form. Such embodiment allows to place the different keys or symbols of the virtual keyboard along the circular edge of the virtual keyboard, as illustrated in FIGs. 4, for example with the key or symbol 402 associated to the number "6". With this embodiment, it is possible to maximize the size of the virtual keyboard 401, and for example it would have been possible to increase the size of 401 until the edge of the virtual keyboard reach one of the edge of the screen 400. Again, in order to maximize the virtual keyboard size, the virtual keyboard could be placed at the center of the screen, and the rotation reference 405 could be placed also at the center of the screen, which would be equivalent to the center of the virtual keyboard.

In a complementary embodiment of present system, in order to be sure that a rotation displaces a key or a symbol sufficiently further away from the location of the key or the symbol when the virtual keyboard is at the default location, the randomized angle of rotation value 420 can be chosen randomly among a list of predefined angle of rotation values.
As illustrated in FIG. 4B, the angle of rotation (or rotation angle) 420, instead of being a random value, that is to say any angle between 0° to 360°, may be chosen among a subset or list of value, for example here the multiple of 36° (as we have here in the example of FIG. 4 ten keys, from "0" to "9"; 360° divided by ten makes an angle of 36°). Indeed, random angle of rotation 420 may be chosen among the list of values (0°, 36°, 72°, 108°, 144°, 180°, 216°, 252°, 288° or 324°). This is restricting the randomness of the location of the keys on the screen but improves the readability of the system.

FIGs. 5A and 5B show an illustration of present system embodiment applied to a circular keyboard and with an off centered reference point for the rotation. Indeed, in the embodiment of present system illustrated in these figures, the reference point 505 of the rotation is distinct from the center 506 of the virtual keyboard 501. The off centering of the reference point of the rotation, comparing to the center of the virtual keyboard, improves the randomness of the different location or position of the keys of the virtual keyboard on the screen. Indeed, using a reference point for the rotation distinct from the center of the virtual keyboard shifts the virtual keyboard position during the rotation. Such embodiment improves the security.

In all previously described situations, the screen is advantageously a touch screen. But it should be noted that possible embodiment of present system may use non-touch screen and pointing devices such as mouse or touch pad.

It is also to be noted that, in a situation when a user is requested to enter a PIN code for example, different embodiment of present system may be used. For example, the virtual keyboard may be presented on the screen, rotated of an angle of rotation around a reference point, this presentation or position of the virtual keyboard being kept during all the steps of the user inputs.

In another embodiment, a different rotation may be applied before or after each user input. By different rotation, it should be understood preferably here "by applying a different angle of rotation".
In a further embodiment of present system, the position of the reference point is moved randomly each time the virtual keyboard is rotated. Preferably, the different positions of the reference point are distinct from the center of the screen or the center of the virtual keyboard. This allows improving the randomness of the location or position of the keys on the screen.

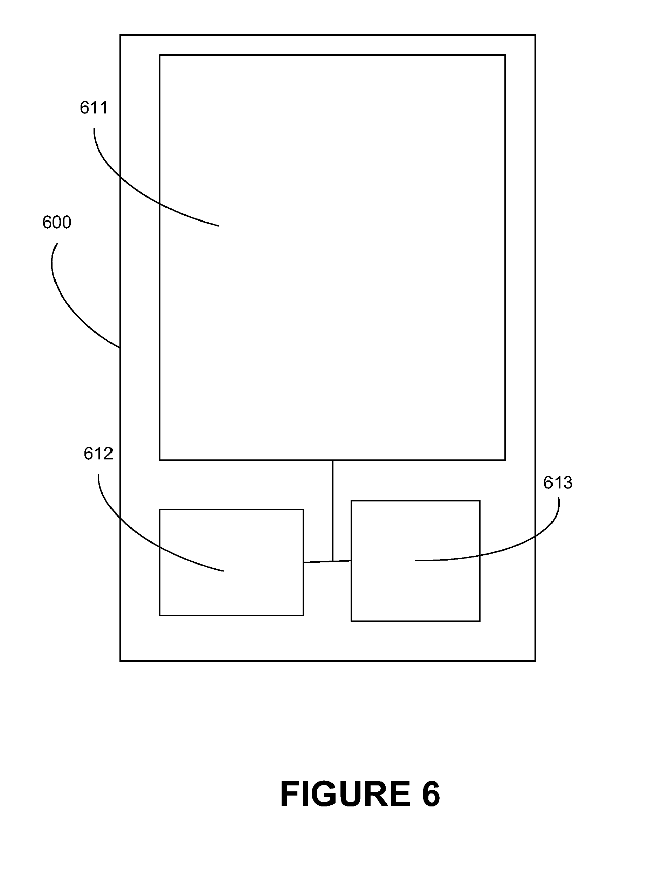

FIG. 6 is an illustration of an exemplary electronic device or mobile device (or in short, device) 600 used in one embodiment of the present system. The mobile device 600 comprises at least a touch screen or display 611, a processor 612, optionally a controller 613 of the display 611, and possibly others module not represented here. Mobile device 600 may be for instance a mobile phone, a smartphone, a PDA (Personal Digital Assistant), a tablet ...
In the present system, the user interaction with and manipulation of an application software executed on the device 600 and rendered on a Graphical User Interface (GUI) are achieved using the display or touch screen 611, which is presently a touch screen operationally coupled to the processor 612 controlling the displayed interface.
Processor 612 may control the rendering and/or the display of the GUI on the display device 611. Processor 612 may also handle the user entries according to the present method. The user entries or user gestures to interact with an application software may be provided through interactions with the touch panel 611 and will be called hereafter user inputs or touch inputs.
The touch panel or touch screen 611 can be seen as an input device allowing interactions with one or more fingers of a user or other devices such as a stylus. The input received from one or more user's touch is sent to the processor 612. The touch panel is configured to detect and report the (location of the) touches inputs to the processor 612 and the processor 612 can interpret the touch inputs in accordance with the application software and the currently displayed GUI. For example, a virtual keyboard may be rendered on the touch screen. A touch input on the key of the virtual keyboard shall be interpreted by the processor 612 as an entry of a character associated with the touched key on the touch screen.
The touch panel may be transparent and placed over the display element, as it is commonly done with a smartphone or an electronic tablet.
The optional controller 613, i.e. a dedicated processor, can be used to process the plurality of touch inputs locally and reduce demand for the main processor 612 of the computer system. The touch panel 611 can be based on sensing technologies including but not limited to capacitive sensing, resistive sensing, surface acoustic wave sensing, pressure sensing, optical sensing, and/or the likes. Here after, for simplification purpose, reference will be made to one or more fingers of the user touching panel 611, other devices such as a stylus may be used in place of the user fingers.
In present document, according to the sensing technology of the touch display 611, the term "touching" should be here after interpreted for example as "touching", "hovering", "pushing", "pressing" or any other term adapted to the sensing technology used.
In the present system, once the type of touch input has been captured and identified, the captured touch input may be referred to as a touch input that allows imparting a control on an application software).

FIG. 7 is described with FIGs. 3A and 3B.

Finally, the above discussion is intended to be merely illustrative of the present system and should not be construed as limiting the appended claims to any particular embodiment or group of embodiments. Thus, while the present system has been described with reference to exemplary embodiments, such as embodiment described in the different figures, it should also be appreciated that numerous modifications and alternative embodiments may be devised by those having ordinary skill in the art without departing from the broader and intended spirit and scope of the present system as set forth in the claims that follow. Further, while exemplary illustrations were provided to facilitate an understanding of the present system, other system for presenting a virtual keyboard on a screen of an electronic device in order to secure inputs received on the virtual keyboard may be provided in accordance with further embodiments of the present system.

The section headings included herein are intended to facilitate a review but are not intended to limit the scope of the present system. Accordingly, the specification and drawings are to be regarded in an illustrative manner and are not intended to limit the scope of the appended claims.
In interpreting the appended claims, it should be understood that:
a) the word "comprising" does not exclude the presence of other elements or acts than those listed in a given claim;
b) the word "a" or "an" preceding an element does not exclude the presence of a plurality of such elements ;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated;
i) the term "plurality of" an element includes two or more of the claimed element, and does not imply any particular range of number of elements; that is, a plurality of elements may be as few as two elements, and may include an immeasurable number of elements, and;
j) the term "greater than" (respectively "lower than") should be understood as "strictly greater than" (resp. "strictly lower than") or "greater than or equal to" (resp. "lower than or equal to"), both implementation being possible unless specifically indicated.

## Claims

1. A method for presenting a virtual keyboard on a screen of an electronic device in order to secure inputs received on the virtual keyboard, the method being executed by the electronic device and comprising the step of:
- generating the virtual keyboard at a default position,
- applying a rotation to the virtual keyboard,
- presenting the rotated virtual keyboard on the screen of the electronic device,
wherein the rotation is applied to the virtual keyboard around a predetermined reference point and according to a randomly generated rotation angle from the default position.

2. The method according to claim 1, wherein the reference point is the center of the virtual keyboard.

3. The method according to claim 1, wherein the reference point is distinct from the center of the virtual keyboard.

4. The method according to any previous claims, wherein the virtual keyboard is arranged in a circular form

5. The method according to wherein the reference point is at the center of the screen.

6. The method according to any previous claims, wherein the randomized angle of rotation value is chosen randomly among a list of predefined angle of rotation values.

7. The method according to any previous claims, further comprising, after the rotation of the virtual keyboard, the steps of:
- rotating the keys of the virtual keyboard around their respective center of an angle of rotation value opposite to the previous randomized angle of rotation value.

8. The method according to any claims from 1 to 6, further comprising, after the rotation of the virtual keyboard, the steps of:
- rotating the symbol associated to the keys of the virtual keyboard around the respective center of the associated key and of an angle of rotation value opposite to the randomized angle of rotation value.

9. The method according to any previous claims wherein the screen is a touch screen.

10. The method according to any previous claims, wherein the rotation is applied before or after each user input.

11. The method according to any previous claims wherein the position of the reference point is moved randomly each time the virtual keyboard is rotated.

12. An electronic device comprising a screen, the electronic device further comprising a processor arranged to:
- generate a virtual keyboard at a default position,
- apply a rotation to the virtual keyboard,
- present the rotated virtual keyboard on the screen,
wherein the rotation is applied to the virtual keyboard around a predetermined reference point and according to a randomly generated rotation angle from the default position.

13. An application program embodied on a non-transitory computer readable medium and arranged to execute the method of claims 1 to 11.
